# EUROPÄISCHE PATENTSCHRIFT

(11) **EP 4 080 102 B1**
(45) Veröffentlichungstag und Bekanntmachung des Hinweises auf die Patenterteilung: **24.01.2024**
(21) Anmeldenummer: 22168353.5
(22) Anmeldetag: 14.04.2022
(51) Int. Cl.: F16P 3/08, E05B 47/00, E05B 17/20, E05B 47/06

(54) **SICHERHEITSSCHALTER MIT ZUHALTUNG**
SAFETY SWITCH WITH TUMBLER
INTERRUPTEUR DE SÉCURITÉ À GÂCHETTE

(30) Priorität: 20.04.2021 DE 102021109993
(43) Veröffentlichungstag der Anmeldung: 26.10.2022
(73) Patentinhaber: Pilz GmbH & Co. KG, 73760 Ostfildern (DE)
(72) Erfinder: Rink, Joachim, 73760 Ostfildern (DE); Loop, Roger, 7310 Bad Ragaz (CH); Veit, Andreas, 73760 Ostfildern (DE)
(74) Vertreter: Witte, Weller & Partner Patentanwälte mbB

(56) Entgegenhaltungen:
- EP-A1- 3 498 955
- EP-A1- 3 576 124
- CN-A- 106 639 681
- DE-A1-102018 009 217
- DE-U1- 9 212 093
- US-A1- 2020 149 320

## Beschreibung

Die vorliegende Erfindung betrifft einen Sicherheitsschalter sowie eine Sicherheitsschaltungsanordnung mit einem Sicherheitsschalter und einem Betätiger.

Sicherheitsschalter und entsprechende Sicherheitsschaltungsanordnungen werden in der Sicherheitstechnik eingesetzt, um Gefährdungen, die von Maschinen und technischen Anlagen ausgehen, für Personen auf ein akzeptables Maß zu reduzieren. Typischerweise werden derartige Sicherheitsschaltungsanordnungen zur Zugangssicherung zu einem Gefahrenbereich eingesetzt, beispielsweise an einer Schutztür, die als trennende Schutzeinrichtung den Zugang zu dem Gefahrenbereich sichert. Der Sicherheitsschalter kann in einem solchen Fall den Betrieb einer gefahrbringenden Anlage innerhalb des Gefahrenbereichs nur dann freigeben, wenn die Sicherheitsschaltungsanordnung gewährleisten kann, dass die Schutztür ordnungsgemäß verriegelt ist. Die Freigabe der Anlage kann über eine Sicherheitssteuerung erfolgen, die mit der Sicherheitsschaltungsanordnung gekoppelt ist und entsprechende sicherheitsrelevante Steuersignale von der Sicherheitsschaltungsanordnung erhält.

Sicherheitsschaltungsanordnungen dieser Art unterliegen normativen Vorgaben, die eine definierte Fehlersicherheit der Sicherheitsschaltungsanordnung vorschreiben. Die geforderte Fehlersicherheit kann durch zusätzliche, sicherheitsgerichtete Einrichtungen an der Sicherheitsschaltungsanordnung erreicht werden. Beispielsweise können ein Sender und ein Empfänger, die an dem Betätiger und dem Sicherheitsschalter angeordnet sind, derart zusammenwirken, dass diese das Vorhandensein des Betätigers in einer definierten Verriegelungsstellung relativ zu dem Sicherheitsschalter sicherstellen.

Zusätzlich zu der Überwachung der Verriegelung kann bei einer Sicherheitsschaltungsanordnung der genannten Art auch eine Zuhaltung vorgesehen sein. Die Zuhaltung bewirkt, dass nicht nur eine Position eines sicherheitsrelevanten, beweglichen Bauteils überwacht wird, sondern auch dieses in einer definierten Position arretiert wird. Eine derartige Zuhaltung ist beispielsweise aus der DE 10 2009 041 101 A1 oder WO 2016/058718 A1 bekannt. Bei den beschriebenen Zuhaltungen ist mittels eines rotatorischen Antriebs ein Zuhaltebolzen zwischen einer Freigabeposition und einer Verriegelungsposition bewegbar, wobei der Zuhaltebolzen und der Antrieb über eine Übertragungseinrichtung kinematisch miteinander gekoppelt sind.

Eine weitere Form der Zuhaltung beschreibt EP 3 474 304 A1, welche einen Sicherheitsschalter mit kleiner und kompakter Bauform zeigt. Der Sicherheitsschalter gemäß EP 3 474 304 A1 hat keinen Zuhaltebolzen. Vielmehr ist eine Verriegelungseinheit vorgesehen, bei der ein Sperrelement in Verriegelungsposition in eine Öffnung der Verriegelungseinheit ragt, um diese zu verkleinern. Ein Betätiger, dessen vorderes Ende eine Querschnittsfläche aufweist, die größer ist als diese verkleinerte Öffnung, jedoch kleiner als die Öffnung alleine, kann damit in der Verriegelungseinheit gehalten werden. Das Sperrelement ist gegen eine Anstellkraft auslenkbar, so dass der Betätiger die Öffnung passieren kann, wobei, sobald der Betätiger in seiner Verriegelungsstellung eingeführt ist, die Anstellkraft das Sperrelement wieder in die Verriegelungsposition überführt und den Betätiger fixiert. Über eine zusätzliche Zuhalteeinheit kann das Sperrelement arretiert werden, so dass es nicht mehr gegen die Anstellkraft auslenkbar ist.

Die in DE 10 2009 041 101 A1 oder WO 2016/058718 A1 gezeigten Zuhaltungen haben den Nachteil, dass der Bolzen stets mit dem jeweiligen Antrieb kinematisch gekoppelt ist und somit eine auf den Bolzen wirkende Kraft auch auf den Antrieb übertragen wird. Die Vorrichtung nach EP 3 474 304 A1 hingegen entkoppelt Sperrelement und Zuhaltung, ist jedoch auf bestimmte Betätigerformen beschränkt.

DE 10 2018 009 217 A1 und US 2020/0149320 A1 zeigen jeweils eine Verriegelungseinrichtung mit Zuhaltung. Die Zuhaltung wird realisiert durch bewegliche Rastelemente, die durch ein axial bewegliches Steuerelement in einer ersten Position verklemmt werden können, um einen Verriegelungsbolzen in einer Verriegelungsposition zu arretieren. In einer zweiten Position des axial beweglichen Steuerelements wird den Rastelementen Bewegungsspiel belassen, sodass der Verriegelungsbolzen von den Rastelemente nicht arretiert ist und der Verriegelungsbolzen die Rastelemente in eine zweite Position verschieben kann.

EP 3 498 955 A1 zeigt eine weitere Sicherheitsverriegelungsvorrichtung, die sich dadurch auszeichnet, dass ein Verriegelungselement in unterschiedlichen Verriegelungsrichtungen befestigt werden kann, die zusammen einen kontinuierlichen Winkelbereich von mindestens 90° bilden.

Vor diesem Hintergrund ist es eine Aufgabe, einen Sicherheitsschalter anzugeben, der eine Zuhaltung über einen Bolzen erlaubt, eine kleine und kompakte Bauform aufweist sowie eine effektive, sichere und energiesparende Zuhaltung ermöglicht.

Gemäß einem Aspekt der vorliegenden Erfindung wird diese Aufgabe gelöst durch einen Sicherheitsschalter aufweisend: einen beweglich gelagerten Sperrbolzen, der eingerichtet ist, einen Betätiger in einer definierten Verriegelungsstellung relativ zum Sicherheitsschalter zu arretieren; ein beweglich gelagertes Sperrschott, das zwischen einer ersten Position und einer zweiten Position bewegbar ist, wobei das Sperrschott eingerichtet ist, in der zweiten Position den beweglich gelagerten Sperrbolzen über einen Formschluss zu fixieren; sowie ein Übertragungselement, das eingerichtet ist, bei einer entlang einer Längsrichtung des Übertragungselements verlaufenden Bewegung das Sperrschott transversal zu der Längsrichtung des Übertragungselements von der ersten Position in die zweite Position zu bewegen.

Es ist somit eine Idee der vorliegenden Erfindung, einen Sicherheitsschalter mit einem Sperrbolzen auszugestalten, der über ein bewegliches Sperrschott arretierbar ist. Über einen Formschluss in der zweiten Position blockiert das Sperrschott eine Bewegung des Sperrbolzens und nimmt dabei auf den Sperrbolzen wirkende Kräfte auf. Kräfte auf den Sperrbolzen, die beispielsweise bei dem Versuch entstehen, eine Schutztür gegen die Zuhaltung zu öffnen, können auf diese Weise auf die Struktur des Sicherheitsschalters, insbesondere auf das Gehäuse, abgeleitet werden, ohne dass diese Kräfte auf ein Anstellelement des Bolzens oder einen Antrieb des Sperrschotts übertragen werden. Insbesondere kann ein Antrieb dann für eine geringere Belastung ausgelegt sein und mit weniger Energie betrieben werden, wodurch der Sicherheitsschalter insgesamt kleiner, kompakter und günstiger ausgestaltet werden kann.

Da die Arretierung über einen Bolzen erfolgt, bestehen vielfältige Möglichkeiten für die Ausgestaltung eines entsprechenden Betätigers oder die Art und Weise, wie ein Betätiger mit dem Sicherheitsschalter kombiniert werden kann. Die Form des Betätigers muss lediglich dazu eingerichtet sein, dass der Bolzen in diesen eingreifen kann, wobei ein Winkel, unter dem der Betätiger radial zu dem Bolzen an den Sicherheitsschalter herangeführt wird, beliebig sein kann. Zusätzlich zu der kleineren und kompakteren Ausgestaltung kann eine Sicherheitsschaltungsanordnung aus Sicherheitsschalter und Betätiger auf diese Weise auch flexibler eingesetzt werden.

Die strukturelle Trennung des Bolzens für die Zuhaltung und dessen Arretierung durch das Schott hat zudem den Vorteil, dass beide Einrichtungen jeweils nur für ihren jeweiligen Zweck ausgelegt sein müssen und sich diese daher besonders effektiv ausgestalten lassen.

In einer bevorzugten Ausgestaltung kann der Sperrbolzen in einem Führungskörper gelagert sein, der eine Aussparung aufweist, durch welche das Sperrschott in dem Führungskörper bewegbar ist, und wobei der Formschluss zwischen dem Sperrschott und dem Führungskörper gebildet ist.

Das Sperrschott kann somit in den Führungskörper des Sperrbolzens hineingeschoben werden, um den Sperrbolzen zu blockieren. Eine über den Bolzen auf das Sperrschott wirkende Kraft wird durch das Sperrschott auf den Führungskörper übertragen und damit auf ein Strukturelement des Sicherheitsschalters. Ein Antrieb des Bolzens sowie ein Antrieb des Sperrschotts können auf diese Weise von dieser Kraft entkoppelt werden.

Für einen Formschluss mit dem Führungskörper des Sperrbolzens ist die Verwendung eines sehr kurzen Schotts ausreichend, welches nur eine kurze Bewegungsstrecke von der ersten Position zur zweiten Position überbrücken muss. Hierdurch kann auch eine Antriebseinrichtung für das Sperrschott einfach und kleinbauend ausgestaltet sein.

Der Sicherheitsschalter weist ferner ein Übertragungselement auf, das eingerichtet ist, bei einer entlang einer Längsrichtung des Übertragungselements verlaufenden Bewegung das Sperrschott transversal, insbesondere senkrecht, zu der Längsrichtung des Übertragungselements von der ersten Position in die zweite Position zu bewegen.

Mittels des Übertragungselements ist es möglich, zum Stellen des Schotts eine laterale Bewegung auszuführen, die im Wesentlichen parallel zu der Bewegung des Sperrbolzens erfolgen kann. Damit ist es möglich, dass sich der Sicherheitsschalter im Wesentlichen in einer Längsrichtung des Sperrbolzens erstreckt, wodurch eine besonders schmale Ausgestaltung des Sicherheitsschalters möglich wird. Das Übertragungselement ermöglicht es ferner, einen Antrieb des Sperrschotts von dem Sperrschott zu entkoppeln. Mit anderen Worten, das Übertragungselement und das Sperrschott können so eingerichtet sein, dass eine auf das Sperrschott wirkende Kraft nicht auf einen Antrieb des Übertragungselements übertragen wird.

In einer weiteren Ausgestaltung kann das Übertragungselement einen ersten Vorsprung aufweisen, der sich in einer ersten Richtung quer zu der Längsrichtung des Übertragungselements erhebt, sowie einen zweiten Vorsprung, der sich in einer zweiten, zu der ersten Richtung gegenüberliegenden Richtung erhebt und in der Längsrichtung relativ zu dem ersten Vorsprung versetzt ist.

Über die Vorsprünge kann auf einfache Weise eine Hub- und Senkbewegung des Sperrschotts transversal zur Längsrichtung des Übertragungselements erreicht werden, ohne dass weitere Komponenten hierfür benötigt werden. Gleichzeitig kann durch diese Art der Kraftumlenkung auf einfache Weise eine Kraftentkopplung realisiert werden.

In einer weiteren Ausgestaltung kann der Sicherheitsschalter ferner einen Antrieb aufweisen, der eingerichtet ist, das Sperrschott von der ersten Position in die zweite Position zu bewegen.

Durch den Antrieb wird eine gesteuerte Zuhaltung des Sicherheitsschalters möglich. Aufgrund der kurzen Wegstrecke, die ein hier beschriebenes Sperrschott zurücklegen muss, um den Bolzen zu arretieren, kann der Antrieb für das Schott sehr einfach, klein und energiesparend ausgebildet sein.

In einer weiteren Ausgestaltung kann der Antrieb ein elektromechanischer Aktor sein, insbesondere ein Hubmagnet, der eingerichtet ist, eine erste Linearbewegung entlang einer definierten Bewegungsrichtung auszuführen.

Der Antrieb kann somit eine einfache Hubeinrichtung sein, wobei diese besonders günstig ausgestaltet werden kann, wenn nur ein geringer Hub auszuüben ist. Dies ist vorliegend durch die entsprechende Ausgestaltung des Sperrschotts möglich.

In einer weiteren Ausgestaltung kann der Sperrbolzen eingerichtet sein, eine zweite Linearbewegung entlang der definierten Bewegungsrichtung auszuführen.

Gemäß dieser Ausgestaltung korrespondieren somit die Bewegungsrichtungen des Bolzens sowie des Antriebs. Auf diese Weise ist es möglich, dass sich der Sicherheitsschalter im Wesentlichen in eine Längsrichtung erstreckt und damit möglichst schmal ausgebildet sein kann.

In einer weiteren Ausgestaltung sind der Sperrbolzen und der Antrieb kraftentkoppelt.

Diese Ausgestaltung trägt dazu bei, dass der Antrieb besonders sparsam und einfach ausgestaltet sein kann, da der Antrieb auf den Sperrbolzen wirkende Zuhaltekräfte nicht kompensieren muss, da diese über den Formschluss entkoppelt sind.

In einer weiteren Ausgestaltung kann der Sicherheitsschalter ein Stellelement mit einer Anstellkraft aufweisen, welches den Sperrbolzen in einer Verriegelungsposition vorspannt.

Gemäß dieser Ausgestaltung verfügt der Sicherheitsschalter über eine Vorzentrierung. Vorzentrierung bedeutet, dass ein Betätiger in einer zur Verriegelung geeigneten Position gehalten wird, ohne dass dieser bereits arretiert ist. Die Vorzentrierung erlaubt es, dass für die tatsächliche Verriegelung der Sperrbolzen selbst nicht noch einmal bewegt werden muss, da sich dieser bereits in einer Arretierposition befindet. Für eine abschließende Verriegelung muss lediglich eine Bewegung des Sperrbolzens gegen die Anstellkraft unterbunden werden.

In einer weiteren Ausgestaltung kann der Sicherheitsschalter ferner eine zusätzliche Entriegelungseinrichtung aufweisen, über die das Sperrschott von der ersten Position in die zweite Position bewegbar ist.

Die zusätzliche Entriegelungseinrichtung kann als Hilfsentriegelung dienen und ein manuelles Entriegeln ermöglichen. Denkbar ist auch, die Hilfsentriegelung zu einer Notentriegelung weiterzubilden. Vorteilhaft dabei ist, dass die zusätzliche Entriegelungseinrichtung ebenfalls nur dazu eingerichtet sein muss, das Sperrschott zu bewegen. Eine Hilfs- oder Notentriegelung kann somit auf einfache Weise realisiert werden.

In einer weiteren Ausgestaltung kann der Sicherheitsschalter ferner eine Leseeinheit aufweisen, die eingerichtet ist, Signale eines korrespondierenden Transponders des Betätigers auszulesen, wenn der Betätiger in der Verriegelungsstellung ist.

Über einen in dem Betätiger enthaltenen Transponder lässt sich die Position des Betätigers auf einfache Weise verifizieren. Die Transponder/Lesegerät-Kombination kann als zusätzliche sichere Einrichtung das Erfüllen der normativen Vorgaben für einen Sicherheitsschalter gewährleisten. Da der Betätiger gemäß der erfindungsgemäßen Ausgestaltung flexibel ausgebildet sein kann, kann auch die Transponder/Leseeinheit-Kombination variabel ausgebildet sein.

In einer weiteren Ausgestaltung kann der Sicherheitsschalter ferner eine Aufnahme aufweisen, in die der Betätiger einführbar ist, um die Verriegelungsstellung einzunehmen, wobei die Aufnahme einen Öffnungswinkel, in dem der Betätiger in die Aufnahme einführbar ist, von 180° aufweist.

Indem ein Betätiger in einem 180°-Winkel dem Sicherheitsschalter zuführbar ist, kann die Sicherheitsschaltungsanordnung flexibel ausgestaltet werden und der Sicherheitsschalter in verschiedenen Ausrichtungen zum Betätiger angeordnet sein.

Es versteht sich, dass die vorstehend genannten und die nachstehend noch zu erläuternden Merkmale nicht nur in der jeweils angegebenen Kombination, sondern auch in anderen Kombinationen verwendbar sind, ohne den durch die nachfolgende Ansprüche definierten Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine perspektivische Darstellung eines Ausführungsbeispiels einer Sicherheitsschaltungsanordnung,
Fig. 2 eine Querschnittsansicht durch einen Sicherheitsschalter gemäß dem Ausführungsbeispiel aus Fig. 1, und
Fig. 3 eine weitere Querschnittsansicht durch das Ausführungsbeispiel der Sicherheitsschaltungsanordnung gemäß Fig. 1.

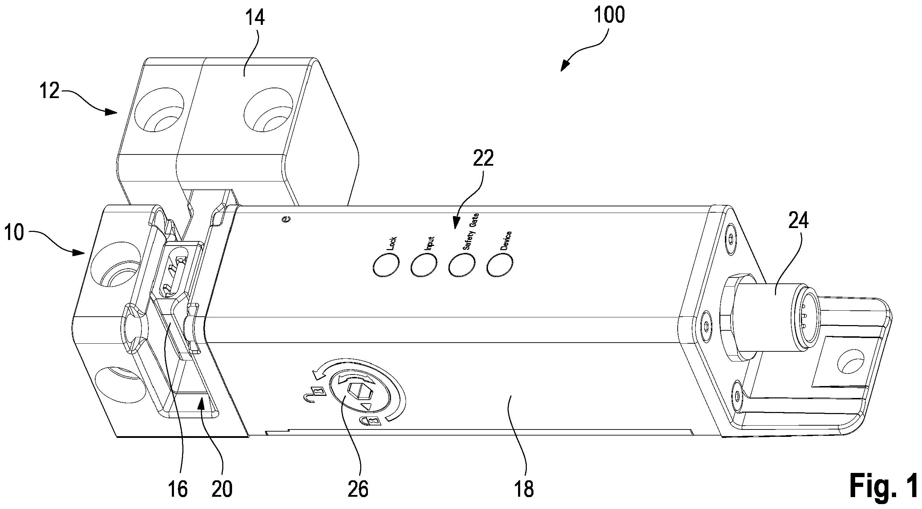

Fig. 1 zeigt in einer perspektivischen Darstellung ein Ausführungsbeispiel einer Sicherheitsschaltungsanordnung. Die Sicherheitsschaltungsanordnung ist hier in ihrer Gesamtheit mit der Bezugsziffer 100 bezeichnet und umfasst im Wesentlichen zwei zueinander bewegliche, zusammenwirkende Komponenten: Sicherheitsschalter 10 und Betätiger 12.

Der Betätiger 12 umfasst einen Halterungsteil 14, über den der Betätiger 12 mit einem sicherheitsrelevanten, beweglichen Bauteil, beispielsweise einer Schutztür, verbindbar ist, und einen Betätigerteil 16, der in eine Wirkverbindung mit dem Sicherheitsschalter 10 in Abhängigkeit einer Position des sicherheitsrelevanten, beweglichen Bauteils bringbar ist.

Der Sicherheitsschalter 10 umfasst ein Gehäuse mit einem Grundkörper 18, der an einer relativ zum beweglichen Bauteil feststehenden Einrichtung, beispielsweise einer Türzarge, befestigbar ist und eine Aufnahme 20 aufweist, in die der Betätigerteil 16 des Betätigers 12 einführbar ist, um die Wirkverbindung herzustellen.

Die Wirkverbindung kann eine Verriegelungsüberwachung sowie eine Zuhaltung beinhalten. Über Anzeigeelemente 22 am Grundkörper 18 kann ein Zustand der Wirkverbindung visualisiert werden. Der Zustand kann ferner über eine Schnittstelle 24 an andere Einrichtungen, insbesondere an eine Sicherheitssteuerung, gemeldet werden, um eine Reaktion in Abhängigkeit des vom Sicherheitsschalter 10 erfassten Zustands auszulösen. Beispielsweise kann eine Sicherheitssteuerung den Betrieb einer technischen Anlage unterbinden, wenn der Betätigerteil 16 nicht ordnungsgemäß in der Aufnahme 20 erfasst wird.

In dem in Fig. 1 gezeigten Ausführungsbeispiel umfasst der Sicherheitsschalter 10 zudem eine Hilfsentriegelungseinrichtung 26, über die eine Hilfs- oder Notfallentriegelung des Betätigers 12 möglich ist. Wie nachfolgend noch näher erläutert wird, kann über die Hilfsentriegelungseinrichtung 26 eine Zuhaltung durch den Sicherheitsschalter 10 manuell gelöst werden.

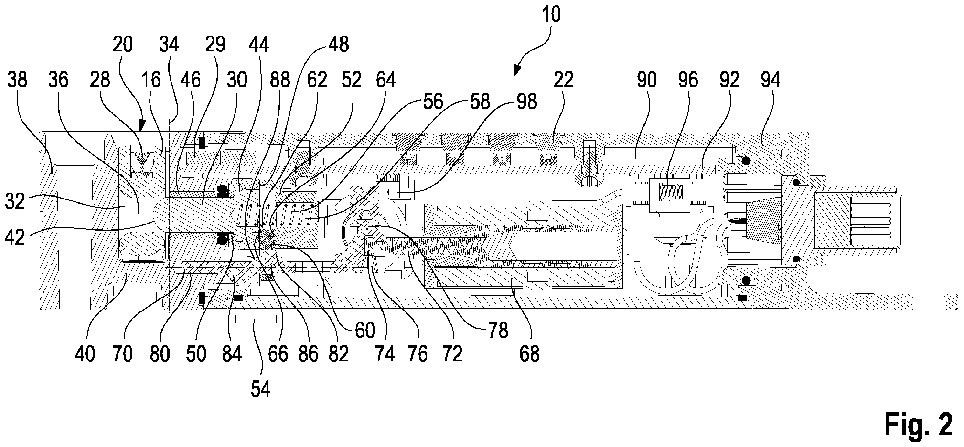

Anhand der Fig. 2 wird im Folgenden exemplarisch ein möglicher Aufbau des Sicherheitsschalters 10 näher erläutert. Fig. 2 zeigt eine Querschnittsansicht des Sicherheitsschalters 10 aus Fig. 1 längs durch den Grundkörper 18. Gleiche Bezugsziffern bezeichnen die gleichen Teile wie in Bezug auf Fig. 1.

Der Betätiger 12 ist in der Fig. 2, wie auch schon in Bezug auf Fig. 1 dargestellt, in jener Verriegelungsstellung zum Sicherheitsschalter 10, in der der Betätigerteil 16 so in der Aufnahme 20 des Sicherheitsschalters 10 positioniert ist, dass eine ordnungsgemäße Verriegelung des sicherheitsrelevanten beweglichen Bauteils in Bezug zu der feststehenden Komponente, an der der Sicherheitsschalter 10 befestigt ist, anzunehmen ist. Die ordnungsgemäße Lage des Betätigerteils 16 in der Aufnahme 20 kann beispielsweise, wie hier angedeutet, über einen Transponder 28 im Betätigerteil 16 und einer entsprechenden Leseeinheit 29 im Sicherheitsschalter 10 realisiert werden. Es versteht sich jedoch, dass der Sicherheitsschalter 10 nicht auf diese Auslegung der Verriegelungsüberwachung beschränkt ist und andere Möglichkeiten zur Positionsbestimmung des Betätigerteils relativ zum Sicherheitsschalter 10 denkbar sind.

In der Verriegelungsstellung kann der Betätigerteil 16 in der Aufnahme 20 durch den Sicherheitsschalter 10 arretiert werden, so dass sich das sicherheitsrelevante, bewegliche Bauteil nicht mehr in Bezug zu der feststehenden Komponente bewegen lässt (Zuhaltung). Zu diesem Zweck weist der Sicherheitsschalter 10 einen beweglich gelagerten Sperrbolzen 30 auf, der mit dem Betätigerteil 16 in Eingriff gebracht werden kann. Beispielsweise kann der Betätigerteil 16 eine Aussparung 32 in Form eines Lochs, wie hier dargestellt, oder in Form einer Eingriffsmulde aufweisen, in die der Sperrbolzen 30 eingreift, um den Betätigerteil 16 zu fixieren. Zur Fixierung ist ein einfaches Eingreifen ausreichend und es kann auf ein Hintergreifen des Betätigerteils 16 verzichtet werden.

Eine Fixierung mittels Sperrbolzen 30 in der beschriebenen Weise ermöglicht es zudem, den Betätigerteil 16 dem Sicherheitsschalter 10 unter einem beliebigen Winkel radial zum Sperrbolzen 30 zuzuführen und zu fixieren. Die Aufnahme 20 kann beispielsweise, wie hier dargestellt, schlitzartig ausgebildet sein, mit einem 180° weiten Öffnungswinkel zur Aufnahme des Betätigerteils 16. Die Aufnahme 20 kann beispielsweise von einer Schließfläche 34, die sich orthogonal zu einer Körperlängsachse 36 des Bolzens erstreckt, einem dem Bolzen 30 gegenüberliegenden Anschlag 38 sowie einem den Anschlag 38 mit dem Grundkörper 18 verbindenden Steg 40 gebildet sein. Alternativ ist auch eine zweiteilige Aufnahme 20 denkbar, bei der der Anschlag 38 vom Grundkörper 18 losgelöst ist. In diesem Fall wäre eine Zuführung des Betätigerteils 16 unter einem 360°-Winkel radial zum Sperrbolzen 30 denkbar.

Der Sperrbolzen 30 kann, wie hier dargestellt, ein zylindrischer Körper sein, der einen abgerundeten Kopfteil 42 aufweist und der in einem radial auskragenden Flanschteil 44 auf einer dem Kopfteil 42 gegenüberliegenden Seite endet. Der Sperrbolzen 30 kann in einer Führung 46 entlang seiner Körperlängsachse 36 beweglich gelagert sein. Der Sperrbolzen 30 ist von einer Arretierstellung, in der der Sperrbolzen 30 in die Schließfläche 34 ragt, und einer Freigabestellung, in der der Sperrbolzen 30 den Betätigerteil 16 freigibt, bewegbar. Der Flanschteil 44 kann in einem hohlzylinderförmigen Führungskörper 48 angeordnet sein, wobei ein oberer Anschlag 50 und ein unterer Anschlag 52 des Führungskörpers 48 eine Bewegungsstrecke 54 definiert, über deren Länge der Sperrbolzen 30 zwischen den beiden Stellungen bewegbar ist.

Eine Schließfeder 56 (Stellelement) spannt den Sperrbolzen für eine Bewegung in die Arretierstellung vor. Der Flanschteil 44 und der Führungskörper 48 können für die Aufnahme und Abstützung der Schließfeder 56 jeweils entsprechende, gegenüberliegende Bohrungen 58 aufweisen. Die Schließfeder 56 kann so ausgebildet sein, dass sie eine Kraft auf den Sperrbolzen 30 ausübt, die für eine Vorzentrierung des Betätigerteils 16 ausreichend ist, diesen jedoch nicht derart blockiert, dass eine Bewegung des Betätigerteils aus der Verriegelungsstellung heraus nicht mehr möglich ist. Vielmehr kann eine Federkraft der Schließfeder 56 so gewählt sein, dass eine Person den vorzentrierten Betätigerteil 16 mit normaler Kraftanstrengung aus der Aufnahme 20 ziehen kann. Durch entsprechende Abrundung des Kopfteils des Sperrbolzens 30 und durch Abrundung der Aussparung 32 im Betätigerteil 16 kann dies weiter begünstigt werden. Beim Ein- und Ausfahren des Betätigerteils 16 wird somit der in Arretierstellung vorgespannte Sperrbolzen 30 gegen die Anstellkraft der Schließfeder 56 ausgelenkt.

Der Sicherheitsschalter 10 weist ferner ein Sperrschott 60 auf, welches eingerichtet ist, den beweglich gelagerten Sperrbolzen 30 zumindest in seiner Arretierstellung zu fixieren. Das Sperrschott 60 kann ein schnell verschiebbarer Verschluss sein, der quer, insbesondere senkrecht, zur Körperlängsachse 36 des Sperrbolzens 30 in die Bewegungsstrecke 54 des Sperrbolzens 30 einbringbar ist. Beispielsweise kann das Sperrschott 60 durch eine radiale Aussparung 62 in dem Führungskörper 48 in diesen einschiebbar sein, um eine erste Position (Sperrposition) einzunehmen.

In der Sperrposition blockiert das Sperrschott 60 eine Bewegung des Sperrbolzens 30 über einen Formschluss. Der Formschluss kann durch das Ineinandergreifen des Sperrschotts 60 mit dem Flanschteil 44 und einer Anschlagsfläche 64 des Führungskörpers 48 gebildet sein. Eine Kraft, die in Längsrichtung auf den Sperrbolzen 30 gegen die Anstellkraft der Schließfeder 56 drückt, wirkt normal zu einer Sperrfläche 66 des Sperrschotts 60, wobei eine der Sperrfläche 66 gegenüberliegende Fläche an der Anschlagsfläche 64 des Führungskörpers 48 anliegt. Der Führungskörper 48, welcher eine auf den Sperrbolzen 30 wirkende Kraft über das Sperrschott 60 aufnimmt, kann fest im Grundkörper 18 gelagert sein und ist damit starr mit dem Bauteil verbunden, an dem das Gehäuse samt Grundkörper 18 befestigt ist.

In der zweiten Position (Freigabeposition) ist die Bewegung des Sperrbolzens 30 freigegeben, so dass sich dieser im Führungskörper 48 entlang der Körperlängsachse 36 bewegen kann. Wenn das Sperrschott 60 in der Freigabeposition ist, kann der Betätigerteil 16 aus der Aufnahme 20 gezogen werden, wobei der Sperrbolzen 30 gegen die Anstellkraft der Schließfeder gedrückt wird.

Wie in der Fig. 2 dargestellt, kann das Sperrschott 60 den Sperrbolzen 30 in der Arretierstellung sperren. Denkbar ist auch, dass in einer anderen Ausführung das Sperrschott 60 den Sperrbolzen 30 ergänzend auch in einer Freigabestellung hält, d.h. in einer Stellung, in der der Sperrbolzen 30 nicht durch die Schließfläche 34 ragt. Hierfür können der Sperrbolzen 30 und das Sperrschott 60 so eingerichtet sein, dass das Sperrschott 60 in den Flanschteil 44 eingreift, um den Sperrbolzen 30 gegen die Anstellkraft der Schließfeder 56 zu halten. Auch hier kann das Sperrschott 60 mit dem Führungskörper 48 derart zusammenwirken, dass eine durch die Anstellkraft verursachte Kraft auf den Sperrbolzen 30 über einen Formschluss abgefangen wird.

Das Sperrschott 60 ist quer, insbesondere senkrecht, zu der Körperlängsachse 36 des Sperrbolzens 30 bewegbar. Eine Antriebskraft für eine Bewegung des Sperrschotts 60 kann von einem Antrieb 68 bereitgestellt werden, der mittels eines Übertragungselements 70 mit dem Sperrschott 60 gekoppelt ist. Das Übertragungselement 70 kann eingerichtet sein, angetrieben durch den Antrieb 68 eine Linearbewegung auszuführen und diese Bewegung auf das Sperrschott 60 zu übertragen.

Der Antrieb 68 kann, wie in Fig. 2 angedeutet, ein Hubmagnet sein, insbesondere ein bistabiler Hubmagnet, der einen Stößel 72 in eine Linearbewegung versetzen kann. Der Stößel 72 endet hier in einem radial auskragenden Kopfteil 74, der in einer Aufnahme 76 an einem unteren Abschnitt 78 des Übertragungselements 70 eingreift, um die Linearbewegung des Antriebs 68 auf das Übertragungselement 70 zu übertragen.

Eine Bewegung des Übertragungselements 70 kann im Wesentlichen parallel zu der Körperlängsachse 36 des Sperrbolzens 30 erfolgen. Für die Bewegung kann das Übertragungselement 70 in einer zu dem Führungskörper 48 parallel verlaufenden Führung 80 gelagert sein. Ferner kann das Übertragungselement 70 das Sperrschott 60 transversal zu der Körperlängsachse 36 des Sperrbolzens 30 bewegen, um diesen, wie vorstehend beschrieben, zu sperren.

Das Sperrschott 60 kann so gelagert sein, dass es ausschließlich eine Bewegung entlang dieser Querachse 82 ausführen kann, wobei Kräfte, die quer zu dieser Achse auf das Sperrschott 60 wirken, von der Lagerung aufgenommen werden. Wie in Fig. 2 dargestellt, können bei einer entsprechenden Wahl der Lagerung der Sperrbolzen 30, das Sperrschott 60 und das Übertragungselement 70 kraftentkoppelt sein. Die Lagerung des Sperrschotts 60 kann beispielsweise durch die Aussparung 62 in dem Führungskörper 48 realisiert sein.

Zur Übertragung der Bewegung vom Übertragungselement 70 auf das Sperrschott 60 kann das Übertragungselement 70 Vorsprünge 84 und 86 aufweisen, die sich quer zur linearen Bewegungsrichtung des Übertragungselements 70 erstrecken. Die Vorsprünge 84, 86 können beispielsweise in der Form von abgerundeten Nocken ausgebildet sein und mit dem Sperrschott 60 zusammenwirken, so dass dieses wahlweise die Sperrposition oder die Freigabeposition einnimmt, wenn das Übertragungselement in lateraler Richtung bewegt wird. Beispielsweise kann das Sperrschott 60 eine Öffnung 88 aufweisen, durch welche das Übertragungselement 70 in Längsrichtung durchgeführt ist, wobei die Vorsprünge 84, 86 das Sperrschott 60 jeweils in die Erstreckungsrichtung der Vorsprünge auslenken.

Eine Strecke, über die das Sperrschott 60 auslenkbar ist, d.h. die Strecke zwischen der ersten Position und der zweiten Position, kann sehr gering sein und beispielsweise weniger als 5 mm betragen. Zudem kann das Sperrschott 60 frei gelagert sein, so dass für die Bewegung von der ersten Position in die zweite Position nur wenig Kraft benötigt wird. Dementsprechend kann ein kleiner und sehr kompakter Antrieb 68 ausreichend sein, um eine effektive Zuhaltung zu gewährleisten. Da zudem eine auf dem Sperrbolzen 30 gegen die Anstellkraft der Schließfeder 56 wirkende Kraft nicht auf den Antrieb 68 übertragen wird, muss dieser nicht dazu ausgebildet sein, solchen Kräften standhalten zu können. Insgesamt kann somit durch die geringe Größe des Antriebs 68 und den einfachen Sperrmechanismus der Sicherheitsschalter 10 sehr klein und kompakt ausgestaltet sein. Ebenso benötigt der Antrieb 68 nur wenig Energie, um bei diesem Aufbau eine effektive Zuhaltung zu ermöglichen.

Der Sicherheitsschalter 10 weist in diesem Ausführungsbeispiel zusätzlich eine Hilfsentriegelungseinrichtung 26 auf, die eine zusätzliche Entriegelungsmöglichkeit bereitstellt. Über die Hilfsentriegelungseinrichtung 26 ist mit Hilfe eines Werkzeugs, beispielsweise eines Schraubenschlüssels oder eines Vierkantschlüssels, der Sicherheitsschalter 10 manuell entsperrbar.

In dem hier dargestellten Ausführungsbeispiel ist die Hilfsentriegelungseinrichtung 26 mit dem Übertragungselement 70 an dessen unterem Abschnitt 78 gekoppelt, wobei eine Drehbewegung der Hilfsentriegelungseinrichtung 26 in die zuvor beschriebene Linearbewegung des Übertragungselements 70 umgesetzt wird. Die Linearbewegung wiederum bewegt das Sperrschott 60 in der zuvor beschriebenen Weise von der Sperrposition in die Freigabeposition.

Da der Antrieb 68 lediglich dafür ausgebildet sein muss, eine Kraft für die Bewegung des Sperrschotts aufzubringen, aber im Übrigen von dem Sperrbolzen kraftentkoppelt ist, kann in dieser Ausgestaltung die Hilfsentriegelung direkt gegen die Antriebskraft des Antriebs 68 betätigt werden. Die hier beschriebene Zuhaltung über ein Sperrschott 60 ermöglicht somit im Gegensatz zu bekannten Sicherheitsschaltern eine besonders einfache Ausgestaltung einer Hilfs- und/oder Notentriegelung, da keine zusätzliche Entkopplung von dem Antrieb 68 vorgesehen sein muss. Hierdurch kann der Aufbau des Sicherheitsschalters 10 noch weiter vereinfacht werden.

Für die Verriegelungsüberwachung durch den Transponder 28 und die Leseeinheit 29, für die Visualisierung eines Zustands des Sicherheitsschalters 10 mittels der Anzeigeelemente 22 sowie für die Ansteuerung des Antriebs 68 kann eine Elektronik 90 vorgesehen sein.

Die Elektronik, die integrierte und diskrete Bauteile umfassen kann, ist hier auf einer einzelnen Leiterplatte 92 angeordnet. Die Leiterplatte 92 erstreckt sich im Wesentlichen in einer Längsrichtung des Sicherheitsschalters 10 unmittelbar entlang einer Oberseite 94 des Gehäuses des Sicherheitsschalters 10. Diese Positionierung hat den Vorteil, dass alle im Wesentlichen elektrischen Komponenten des Sicherheitsschalters 10 auf einer Leiterplatte angeordnet sein können. Dies umfasst zum einen die Leseeinheit 29, die Anzeigeelemente 22, eine Antriebssteuerung 96 sowie eine Sensorik 98 zur Erfassung des jeweiligen Betriebszustands der Zuhaltung.

Die Sensorik 98 kann beispielsweise eine Lichtschranke sein, deren Lichtstrahl in Abhängigkeit der Position des Übertragungselements 70 unterbrochen wird.

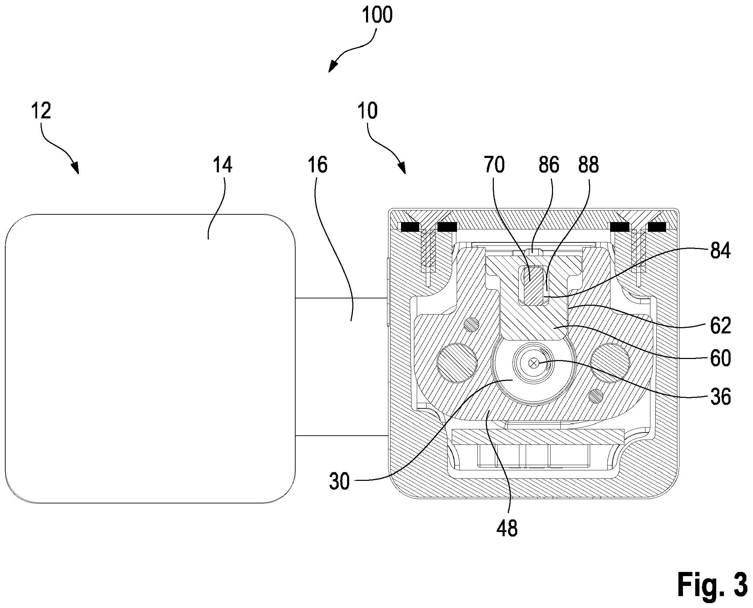

Fig. 3 zeigt eine Querschnittsansicht der zuvor beschriebenen Sicherheitsschaltungsanordnung 100. Gleiche Bezugszeichen bezeichnen auch hier wieder gleiche Teile wie zuvor in Fig. 1 und Fig. 2.

Die Schnittebene ist hier eine Normalenebene zur Körperlängsachse 36 des Sperrbolzens 30 und verläuft durch das Sperrschott 60. Wie in den Darstellungen zuvor, ist das Sperrschott 60 auch in dieser Darstellung in der Sperrposition, in der eine Bewegung des Sperrbolzens 30 blockiert wird. Der Sperrbolzen 30 ist in dem Führungskörper 48 so gelagert, dass sich der Bolzen 30 entlang seiner Körperlängsachse 36 bewegen kann. Das Sperrschott 60 ist beweglich in einer Aussparung 62 des Führungskörpers 48 gelagert und quer zur Körperlängsachse 36 bewegbar. Das Sperrschott 60 weist in diesem Ausführungsbeispiel eine Öffnung 88 auf, durch die das Übertragungselement 70 hindurchgeführt ist. Das Übertragungselement 70 ist parallel zur Körperlängsachse 36 bewegbar. Die Vorsprünge 84 und 86 verrücken hierbei das Sperrschott 60 entweder in die Sperrposition oder in die Freigabeposition. Zusätzliche Anschläge am Führungskörper 48 verhindern, dass das Sperrschott zu weit in den Führungskörper 48 eingeschoben werden kann.

Es versteht sich, dass das Sperrschott 60 nicht auf die hier dargestellte Form beschränkt ist, sondern dass andere Varianten denkbar sind, wie das Sperrschott 60 ausgestaltet sein kann. Wesentlich ist, dass das Sperrschott 60 derart in eine Bewegungsstrecke des Sperrbolzens 30 eingreifen kann, so dass dieser über einen Formschluss in seiner Bewegung gesperrt ist. Der Formschluss kann mit dem Führungsköper 48 gebildet werden.

Ebenso ist das hier gezeigte Ausführungsbeispiel nur exemplarisch zu verstehen und weitere verschiedene Ausführungsformen sind denkbar. Grundsätzlich ist der Schutzbereich der vorliegenden Erfindung durch die nachfolgenden Ansprüche bestimmt und durch die in der Beschreibung erläuterten oder in den Figuren gezeigten Merkmale nicht beschränkt.

## Patentansprüche

1. Sicherheitsschalter (10), aufweisend: einen beweglich gelagerten Sperrbolzen (30), der eingerichtet ist, einen Betätiger (12) in einer definierten Verriegelungsstellung relativ zum Sicherheitsschalter (10) zu arretieren; ein beweglich gelagertes Sperrschott (60), das zwischen einer ersten Position und einer zweiten Position bewegbar ist, wobei das Sperrschott (60) eingerichtet ist, in der zweiten Position den beweglich gelagerten Sperrbolzen (30) über einen Formschluss zu fixieren; sowie ein Übertragungselement (70), das eingerichtet ist, bei einer entlang einer Längsrichtung des Übertragungselements (70) verlaufenden Bewegung das Sperrschott (60) transversal zu der Längsrichtung des Übertragungselements (70) von der ersten Position in die zweite Position zu bewegen.

2. Sicherheitsschalter nach Anspruch 1, wobei der beweglich gelagerte Sperrbolzen (30) in einem Führungskörper (48) gelagert ist, der eine Aussparung (62) aufweist, durch welche das Sperrschott (60) in den Führungskörper (48) bewegbar ist, und wobei der Formschluss zwischen dem Sperrschott (60) und dem Führungskörper (48) gebildet ist.

3. Sicherheitsschalter nach einem der Ansprüche 1 oder 2, wobei das Übertragungselement (70) eingerichtet ist, das Sperrschott (60) senkrecht zu der Längsrichtung des Übertragungselements (70) von der ersten Position in die zweite Position zu bewegen.

4. Sicherheitsschalter nach einem der Ansprüche 1 bis 3, wobei das Übertragungselement (70) einen ersten Vorsprung (84) aufweist, der sich in einer ersten Richtung quer zur Längsrichtung des Übertragungselements (70) erhebt, sowie einen zweiten Vorsprung (86), der sich in einer zweiten, zur ersten Richtung gegenüberliegenden Richtung erhebt und in der Längsrichtung des Übertragungselements (70) relativ zu dem ersten Vorsprung (84) versetzt ist.

5. Sicherheitsschalter nach einem der Ansprüche 1 bis 4, ferner aufweisend einen Antrieb (68), der eingerichtet ist, das Sperrschott (60) von der ersten Position in die zweite Position zu bewegen.

6. Sicherheitsschalter nach Anspruch 5, wobei der Antrieb (68) ein elektromechanischer Aktor ist, insbesondere ein Hubmagnet, und wobei der Antrieb (68) eingerichtet ist, eine erste Linearbewegung entlang einer definierten Bewegungsrichtung auszuführen.

7. Sicherheitsschalter nach Anspruch 6, wobei der beweglich gelagerte Sperrbolzen (30) eingerichtet ist, eine zweite Linearbewegung entlang der definierten Bewegungsrichtung auszuführen.

8. Sicherheitsschalter nach einem der Ansprüche 5 bis 7, wobei der beweglich gelagerte Sperrbolzen (30) und der Antrieb (68) kraftentkoppelt sind.

9. Sicherheitsschalter nach einem der Ansprüche 1 bis 8, ferner aufweisend ein Stellelement (56) mit einer Anstellkraft, welches den beweglich gelagerten Sperrbolzen (30) in einer Verriegelungsposition vorspannt.

10. Sicherheitsschalter nach einem der Ansprüche 1 bis 9, ferner aufweisend eine Hilfsentriegelungseinrichtung (26), über die das Sperrschott (60) von der ersten Position in die zweite Position bewegbar ist.

11. Sicherheitsschalter nach Anspruch 10, wobei die Hilfsentriegelungseinrichtung (26) kinematisch mit dem Antrieb (68) gekoppelt ist, und wobei das Sperrschott (60) über die Hilfsentriegelungseinrichtung (26) gegen eine Antriebskraft des Antriebs (68) bewegbar ist.

12. Sicherheitsschalter nach einem der Ansprüche 1 bis 11, ferner aufweisend eine Leseeinheit (29), die eingerichtet ist, Signale eines korrespondierenden Transponders (28) des Betätigers (12) auszulesen, wenn dieser in der Verriegelungsstellung ist.

13. Sicherheitsschalter nach einem der Ansprüche 1 bis 12, ferner aufweisend eine Auswerteeinheit, die eingerichtet ist, eine Position eines Betätigerteils (16) des Betätigers (12), eine Position des Sperrbolzens (30) und/oder eine Position des Sperrschotts (60) direkt oder indirekt zu erfassen und an eine mit dem Sicherheitsschalter (10) verbundene Steuerung zu signalisieren.

14. Sicherheitsschalter nach einem der Ansprüche 1 bis 13, ferner aufweisend eine Aufnahme (20), in die ein Betätigerteil (16) des Betätigers (12) einführbar ist, um die Verriegelungsstellung einzunehmen, wobei die Aufnahme (20) einen Öffnungswinkel von 180° aufweist, in dem der Betätigerteil (16) in die Aufnahme (20) einführbar ist.

15. Sicherheitsschaltungsanordnung (100) mit einem Sicherheitsschalter (10) nach einem der Ansprüche 1 bis 14 sowie mit einem Betätiger (12), der relativ zu dem Sicherheitsschalter (10) beweglich ist.

## Claims

1. A safety switch (10), comprising: a movably mounted locking bolt (30) configured to lock an actuator (12) in a defined locking position relative to the safety switch (10); a movably mounted locking bulkhead (60) movable between a first position and a second position, wherein the locking bulkhead (60) is configured to fix the movably mounted locking bolt (30) in the second position via a positive fit; and a transfer element (70) configured to move the locking bulkhead (60) transversely to a longitudinal direction of the transfer element (70) from the first position to the second position upon a movement extending along the longitudinal direction of the transfer element (70).

2. The safety switch of claim 1, wherein the movably mounted locking bolt (30) is mounted in a guide body (48) having a recess (62) through which the locking bulkhead (60) is movable in the guide body (48), and wherein the positive fit is formed between the locking bulkhead (60) and the guide body (48).

3. The safety switch of claim 1 or 2, wherein the transfer element (70) is configured to move the locking bulkhead (60) perpendicularly to the longitudinal direction of the transfer element (70) from the first position to the second position.

4. The safety switch of any one of claims 1 to 3, wherein the transfer element (70) includes a first projection (84) that rises in a first direction transverse to the longitudinal direction of the transfer element (70) and a second projection (86) that rises in a second direction opposite the first direction and which is offset in the longitudinal direction of the transfer element (70) relative to the first projection (84).

5. The safety switch of any one of claims 1 to 4, further comprising: a drive (68) configured to move the locking bulkhead (60) from the first position to the second position.

6. The safety switch of claim 5, wherein the drive (68) is an electromechanical actuator, in particular a solenoid, and wherein the drive (68) executes a first linear movement along a defined direction of movement.

7. The safety switch of claim 6, wherein the movably mounted locking bolt (30) is configured to perform a second linear movement along the defined direction of movement.

8. The safety switch of any one of claims 5 to 7, wherein the movably mounted locking bolt (30) and the drive (68) are force-decoupled.

9. The safety switch of any one of claims 1 to 8, further comprising: an actuator element (56) having an actuating force that biases the movably mounted locking bolt (30) into a pre-centering position.

10. The safety switch of any one of claims 1 to 9, further comprising: an auxiliary unlocking device (26) by which the locking bulkhead (60) is movable from the first position to the second position.

11. The safety switch of claim 10, wherein the auxiliary unlocking device (26) is kinematically coupled to the drive (68), and the locking bulkhead (60) is movable via the auxiliary unlocking unit (26) against a driving force of the drive (68).

12. The safety switch of any one of claims 1 to 11, further comprising: a reader (29) configured to read signals from a corresponding transponder (28) of the actuator (12) when the actuator (12) is in the defined locking position.

13. The safety switch of any one of claims 1 to 12, further comprising: an evaluation unit configured to directly or indirectly detect a position of an actuator part (16) of the actuator (12), a position of the locking bolt (30), and/or a position of the locking bulkhead (60) and to signal the detected position to a controller connected to the safety switch (10).

14. The safety switch of any one of claims 1 to 13, further comprising: a receptacle (20) into which an actuator part (16) of the actuator (12) is insertable to assume the defined locking position, wherein the receptacle (20) has an opening angle of 180° at which the actuator part (16) is insertable into the receptacle (20).

15. A safety switching arrangement (100), comprising: a safety switch (10) according to any one of claims 1 to 14, and an actuator (12) movable relative to the safety switch (10).

## Revendications

1. Interrupteur de sécurité (10), présentant un boulon d'arrêt (30) monté mobile, lequel est conçu pour bloquer un actionneur (12) dans une position de verrouillage définie par rapport à l'interrupteur de sécurité (10) ; une cloison d'arrêt (60) montée mobile, laquelle est déplaçable entre une première position et une deuxième position, la cloison d'arrêt (60) étant conçue pour fixer le boulon d'arrêt (30) monté mobile par engagement par complémentarité de formes dans la deuxième position ; ainsi qu'un élément de transmission (70), lequel est conçu pour déplacer la cloison d'arrêt (60) transversalement par rapport à la direction longitudinale de l'élément de transmission (70) de la première position à la deuxième position lors d'un déplacement s'étendant le long d'une direction longitudinale de l'élément de transmission (70).

2. Interrupteur de sécurité selon la revendication 1, le boulon d'arrêt (30) monté mobile étant monté dans un corps de guidage (48) qui présente un évidement (62) à travers lequel la cloison d'arrêt (60) est déplaçable dans le corps de guidage (48), et l'engagement par complémentarité de formes étant formé entre la cloison d'arrét (60) et le corps de guidage (48).

3. Interrupteur de sécurité selon l'une des revendications 1 ou 2, l'élément de transmission (70) étant conçu pour déplacer la cloison d'arrêt (60) perpendiculairement à la direction longitudinale de l'élément de transmission (70) de la première position à la deuxième position.

4. Interrupteur de sécurité selon l'une des revendications 1 à 3, l'élément de transmission (70) présentant une première saillie (84) qui s'élève dans une première direction transversalement à la direction longitudinale de l'élément de transmission (70), ainsi qu'une deuxième saillie (86) qui s'élève dans une deuxième direction opposée à la première direction et est décalée par rapport à la première saillie (84) dans la direction longitudinale de l'élément de transmission (70).

5. Interrupteur de sécurité selon l'une des revendications 1 à 4, présentant en outre un entraînement (68) qui est conçu pour déplacer la cloison d'arrêt (60) de la première position à la deuxième position.

6. Interrupteur de sécurité selon la revendication 5, l'entraînement (68) étant un actionneur électromécanique, en particulier un aimant de levage, et l'entraînement (68) étant conçu pour effectuer un premier déplacement linéaire le long d'une direction de déplacement définie.

7. Interrupteur de sécurité selon la revendication 6, le boulon d'arrêt (30) monté mobile étant conçu pour effectuer un deuxième déplacement linéaire le long de la direction de déplacement définie.

8. Interrupteur de sécurité selon l'une des revendications 5 à 7, le boulon d'arrêt (30) monté mobile et l'entraînement (68) étant désaccouplés en termes de force.

9. Interrupteur de sécurité selon l'une des revendications 1 à 8, présentant en outre un élément de réglage (56) doté d'une force de réglage, lequel précontraint le boulon d'arrêt (30) monté mobile dans une position de verrouillage.

10. Interrupteur de sécurité selon l'une des revendications 1 à 9, présentant en outre un dispositif de déverrouillage auxiliaire (26) par le biais duquel la cloison d'arrêt (60) est déplaçable de la première position à la deuxième position.

11. Interrupteur de sécurité selon la revendication 10, le dispositif de déverrouillage auxiliaire (26) étant accouplé cinématiquement à l'entraînement (68), et la cloison d'arrêt (60) étant déplaçable à l'encontre d'une force d'entraînement de l'entraînement (68) par le biais du dispositif de déverrouillage auxiliaire (26).

12. Interrupteur de sécurité selon l'une des revendications 1 à 11, présentant en outre une unité de lecture (29) qui est conçue pour lire des signaux d'un transpondeur (28) correspondant de l'actionneur (12), lorsque celui-ci est dans la position de verrouillage.

13. Interrupteur de sécurité selon l'une des revendications 1 à 12, présentant en outre une unité d'évaluation qui est conçue pour détecter directement ou indirectement une position d'une partie d'actionneur (16) de l'actionneur (12), une position du boulon d'arrêt (30) et/ou une position de la cloison d'arrêt (60) et pour la/les signaler à une commande connectée à l'interrupteur de sécurité (10).

14. Interrupteur de sécurité selon l'une des revendications 1 à 13, présentant en outre un logement (20) dans lequel une partie d'actionneur (16) de l'actionneur (12) peut être insérée, afin d'adopter la position de verrouillage, le logement (20) présentant un angle d'ouverture de 180° auquel la partie d'actionneur (16) peut être insérée dans le logement (20).

15. Agencement de commutation de sécurité (100) comportant un interrupteur de sécurité (10) selon l'une des revendications 1 à 14 et comportant un actionneur (12) qui est mobile par rapport à l'interrupteur de sécurité (10).
